# FASCICULE DE BREVET EUROPEEN

(11) **EP 2 576 315 B1**
(45) Date de publication et mention de la délivrance du brevet: **26.09.2018**
(21) Numéro de dépôt: 10731496.5
(22) Date de dépôt: 30.06.2010
(51) Int. Cl.: B61L 23/04, B61L 3/12, B61L 27/04, B61L 23/00, H04N 7/18

(54) **SECURISATION D'UNE TRANSMISSION VIDEO A DISTANCE DESTINEE AU CONTROLE A DISTANCE D'UN VEHICULE**
SICHERE FERNVIDEOÜBERTRAGUNG ZUR FERNSTEUERUNG EINES FAHRZEUGES
SECURING REMOTE VIDEO TRANSMISSION FOR THE REMOTE CONTROL OF A VEHICLE

(30) Priorité: 19.05.2010 EP 10290263
(43) Date de publication de la demande: 10.04.2013
(73) Titulaire: Siemens S.A.S., 93527 Saint-Denis Cedex (FR)
(72) Inventeur: NOGUEIRA ALVES, Clara, F-92130 Issy Les Moulineaux (FR)
(74) Mandataire: Maier, Daniel Oliver
(86) Numéro de dépôt international: PCT/EP2010/059275
(87) Numéro de publication internationale: WO 2011/144261

(56) Documents cités:
- EP-A1- 1 326 423
- DE-A1- 4 339 075
- US-A1- 2009 066 790
- US-B1- 6 750 902
- US-B1- 7 508 941
- JAVIDI: "SECURING INFORMATION WITH OPTICAL TECHNOLOGIES", PHYSICS TODAY, AMERICAN INSTITUTE OF PHYSICS, NEW YORK, US, vol. 50, no. 3, 1 mars 1997 (1997-03-01), pages 27-32, XP002116193, ISSN: 0031-9228

## Description

La présente invention concerne une méthode et un système de sécurisation d'une transmission à distance d'une image destinée à être capturée par un récepteur photosensible d'un système vidéo, selon les préambules des revendications 1 et 13.

En particulier, la présente invention se rapporte au domaine des véhicules guidés nécessitant un contrôle à distance au moyen d'au moins une caméra embarquée comprenant ledit récepteur photosensible, ledit contrôle à distance devant être caractérisé par un haut niveau de sécurité de fonctionnement.

Par « véhicule guidé », il est fait référence aux moyens de transport en commun tels que des bus, trolleybus, tramways, métros, trains ou unités de train, etc., et aux moyens de transport de charge tel que, par exemple, les ponts roulants, pour lesquels l'aspect sécuritaire est très important. En particulier, l'invention se rapporte au domaine ferroviaire, notamment aux moyens de transport équipés d'un système de contrôle basé sur une communication à distance, par exemple les trains équipés d'un système de contrôle de trains par radio, communément appelé "Communication Based Train Control" (CBTC) .

Il est connu de l'homme du métier que des images d'un objet prises par une caméra peuvent être transmises à distance afin d'être visualisées en temps réel à un emplacement éloigné dudit objet. Ainsi, une caméra embarquée dans un véhicule est apte à filmer un objet, par exemple une scène intérieure ou extérieure au véhicule, et à coopérer avec un dispositif de transmission d'images vidéo apte à transmettre depuis le véhicule un signal vidéo de l'objet filmé à un dispositif de réception au sol apte à réceptionner ledit signal vidéo, et à coopérer avec un dispositif de visualisation afin de visualiser ledit objet filmé à partir dudit signal vidéo réceptionné. Des images peuvent ainsi être prises par ladite caméra embarquée afin d'être visualisées à distance par un opérateur au moyen dudit dispositif de visualisation.

Un tel système vidéo comprenant la caméra apte à être embarquée, le dispositif de transmission, le dispositif de réception et le dispositif de visualisation peut permettre notamment une conduite ou un contrôle à distance du véhicule par un opérateur, ladite conduite ou contrôle se basant notamment sur la visualisation des images vidéo en temps réel par ledit opérateur. Une telle fonction de contrôle ou commande à distance par visualisation, par exemple sur un écran d'un dispositif de visualisation, de l'image acquise par une caméra embarquée à bord du véhicule contrôlé ou commandé à distance est notamment décrite dans les publications de demandes de brevets US 2009/0248220 A1, WO 2009/087543 A2, ou encore dans le brevet US 6,803,854 B1.

L'image d'un objet prise par un récepteur photosensible et sa visualisation à distance, i.e. ladite image dudit objet visualisée à distance, peuvent être différentes. En effet, des dysfonctions du système vidéo peuvent conduire à une non-conformité de l'image visualisée avec l'image de l'objet tel que filmé et capturé par le récepteur photosensible d'une caméra. En effet, de nombreuses sources d'erreurs peuvent modifier un contenu et/ou un séquençage des images acquises et traitées par un système vidéo. Par exemple, des erreurs peuvent provenir de la caméra, du dispositif de transmission, du dispositif de réception, ou du dispositif de visualisation. Ainsi, lesdites erreurs peuvent survenir à différents niveaux, que ce soit par exemple lors d'un traitement d'une image vidéo, lors de la transmission d'un signal vidéo correspondant à ladite image ou lors de son affichage, et altérer conséquemment l'image visualisée.

De plus, diverses manipulations sur les images d'un film vidéo peuvent provoquer des perturbations plus ou moins importantes sur son affichage et donc sa visualisation. Ces manipulations peuvent être dictées par les besoins d'un traitement d'image (comme la compression, le filtrage, le codage, l'échantillonnage, etc.) ou bien vues comme des opérations malveillantes. Une opération malveillante consiste par exemple à récupérer le contenu de l'image ou à le modifier dans une intention de nuire.

De plus, des erreurs ou des défauts observés sur une image transmise numériquement peuvent provenir de paramètres de compression utilisés par un codeur vidéo nécessaire à la numérisation de l'image. Une autre source de perturbations est le réseau de transmission du signal vidéo dont les temps de transmission sont difficilement maîtrisables. Par exemple, la gigue (variation du temps de transmission) peut induire une réplication ou une suppression d'une partie du signal vidéo dans le domaine spatial ou temporel. Il en résulte une répétition ou une suppression d'images, ou encore une perte ou un ajout de lignes ou de colonnes dans une image particulière du film vidéo.

D'autre part, les systèmes vidéo permettant actuellement une visualisation à distance d'images vidéo prises par une caméra apte à être embarquée à bord d'un véhicule dépendent de systèmes électroniques complexes qui intègrent de multiples composants pouvant chacun être potentiellement une source d'erreurs ou de dysfonctions résultant en une image visualisée à distance différente de l'image capturée par le récepteur photosensible, alors que chacune des images (i.e. image telle que capturée et image telle que visualisée) est sensée représenter le même objet.

Les sources d'erreurs et de dysfonctions susmentionnées font que la maîtrise de la fiabilité et de la sûreté des systèmes vidéo au cours du temps et lors de différents modes de fonctionnement est souvent difficile, voire impossible. Or ces systèmes vidéo interviennent dans des équipements qui réclament parfois un niveau de sûreté de fonctionnement élevé, en particulier lorsqu'une panne peut avoir des conséquences graves. En effet, une défaillance de fonctionnement d'un système vidéo, permettant par exemple une conduite à distance d'un véhicule guidé à partir d'une visualisation en temps réel d'images prises par une caméra embarquée à bord du véhicule guidé, peut devenir une cause d'accident pour ledit véhicule guidé, et avoir de graves conséquences, par exemple pour les passagers qu'il transporte.

Lorsqu'un opérateur contrôle à distance un véhicule en se basant sur l'affichage d'images fournies par un système vidéo destiné au contrôle à distance dudit véhicule, un risque subsiste que ledit opérateur ne remarque pas une défaillance de ladite image, ou que l'affichage de ladite image soit fortement retardé par rapport à la prise de l'image par la caméra apte à être embarquée dans ledit véhicule. Si un obstacle est présent sur une voie de circulation dudit véhicule, sa détection par ledit opérateur doit être effective dans un temps limité afin de commander à distance par exemple un freinage. Dans le cas contraire, un choc avec l'obstacle ne sera pas évitable.

Ainsi, un contrôle à distance sûr et fiable du véhicule au moyen d'un système vidéo ne peut se faire que si les images réceptionnées à un poste de contrôle à distance sont sûres au sens de la sûreté de fonctionnement. Autrement dit, il est nécessaire de pouvoir sécuriser la transmission d'une image d'un objet destinée d'une part à être prise par un récepteur photosensible apte à être embarqué dans le véhicule destiné à être contrôlé à distance, et d'autre part à servir au contrôle à distance dudit véhicule. En d'autres termes, il est nécessaire de garantir qu'une image vidéo dudit objet visualisée par un opérateur à distance dudit objet corresponde en temps réel à l'image dudit objet captée par ledit récepteur photosensible. Des techniques sont connues de l'homme du métier afin de sécuriser des images et vérifier que le contenu desdites images n'a pas été falsifié. De telles techniques sont par exemples décrites dans les documents DE 43 39 075 A1, EP 1 326 423 A1, US 2009/066790 A1, US 7 508 941 B1, ou encore dans l'article intitulé « Securing information with optical technologies » (Javidi, Physics Today, American Institute of Physics, New York, US, vol. 50, no. 3, 1 mars 1997, pages 27-32). Cependant, aucune des techniques décrites ne permet de vérifier la sûreté de fonctionnement d'un système vidéo.

Un but de la présente invention est de proposer une méthode et un système simples, sûrs et fiables, de sécurisation d'une transmission à distance par un système vidéo d'une image d'un objet destinée à être capturée par un récepteur photosensible dudit système vidéo, ledit système et ladite méthode de sécurisation étant adaptables à tout type de système vidéo, et aptes à garantir la sûreté dudit système vidéo, en particulier en étant capable de sécuriser une correspondance en temps réel de l'image dudit objet visualisée à distance et de l'image dudit objet prise par le récepteur photosensible d'une caméra du système vidéo apte à être embarquée.

Un autre but de la présente invention est en particulier de signaler à un opérateur éloigné dudit objet toutes les dysfonctions et sources d'erreurs précitées.

Par correspondance entre l'image d'un objet visualisée à distance et l'image dudit objet filmé par le récepteur photosensible de la caméra, il est notamment fait référence à la conformité de l'image visualisée (ou affichée) à distance à un temps t₂ = t+Δt et représentant ledit objet au temps t, avec l'image dudit objet prise par le récepteur photosensible au temps t₁ = t et représentant ledit objet au temps t. En d'autres termes, la présente invention doit permettre de décider si l'image d'un objet prise par le récepteur photosensible au temps t₁ est identique, à grandissement égal, à l'image du même objet affichée à distance au temps t₂ et destinée à permettre, par exemple, le contrôle à distance d'un véhicule par un opérateur. Ainsi, une image d'un objet visualisable à distance sera considérée comme identique à une image dudit objet destinée à être capturée par un récepteur photosensible, si chacune des deux images représente le même objet, i.e. l'objet au même temps t et si l'intervalle de temps Δt ne dépasse pas une limite préfixée, par exemple 0.5 seconde.

Dans ce but, une méthode, des dispositifs et un système sont proposés par le contenu des revendications 1, 6, 11 et 13. Un ensemble de sous-revendications présente également des avantages de l'invention.

La présente invention propose une méthode de sécurisation, en particulier en temps réel, d'une transmission à distance d'une image d'un objet destinée à être capturée par un récepteur photosensible d'une caméra d'un système vidéo et transmise à distance par ledit système vidéo pour sa visualisation à distance, ladite méthode étant caractérisée par les étapes suivantes:
- une génération d'une information optique de sécurisation de la transmission à distance de ladite image dudit objet, en particulier une génération par rayonnement, par exemple cohérent ou incohérent, par émission ou diffusion, de ladite information optique de sécurisation, destinée à former une image de sécurisation;
- une formation d'une image optique sécurisée dudit objet par superposition optique de l'image de sécurisation comprenant ladite information optique de sécurisation et de ladite image dudit objet. Ladite superposition est ainsi apte à résulter en ladite image optique sécurisée, destinée à agir sur le récepteur photosensible de la caméra afin d'être transformée en un signal vidéo. Ladite image de sécurisation est en particulier une image optique réelle ou virtuelle de ladite information optique de sécurisation, par exemple rayonnée par un générateur d'information optique de sécurisation capable d'effectuer ladite génération;
- une vérification, à distance dudit objet, de l'information optique de sécurisation portée par ledit signal vidéo relatif à la superposition optique de l'image de sécurisation et de l'image dudit objet.

La méthode selon l'invention convient ainsi à la sécurisation de la transmission à distance de ladite image dudit objet par ledit système vidéo. Elle propose d'insérer optiquement au moins une information optique de sécurisation dans l'image dudit objet (i.e. dans une image optique réelle ou virtuelle), destinée à servir au contrôle à distance d'un véhicule, afin de créer ladite image optique sécurisée dudit objet. L'image optique sécurisée, destinée à être captée par le récepteur photosensible de la caméra, est dans ce cas la superposition optique de l'image de sécurisation de l'information optique de sécurisation et de l'image dudit objet et est transformable, par le récepteur photosensible, en un signal vidéo électrique destiné à transporter toutes les données relatives à ladite image optique sécurisée, en vue par exemple d'un affichage à distance d'une image vidéo sécurisée comprenant ladite information optique de sécurisation et/ou représentant ladite image optique sécurisée et/ou ladite image dudit objet. Ladite image vidéo sécurisée est donc une image vidéo de ladite image optique sécurisée, restituable à partie dudit signal vidéo électrique provenant du photorécepteur. Une fois l'insertion de l'information optique de sécurisation dans ladite image dudit objet effectuée, un système vidéo destiné au contrôle à distance d'un véhicule peut en particulier permettre une visualisation à distance de ladite image optique sécurisée comprenant au moins une information de sécurisation. En effet, après capture de l'image optique sécurisée par le récepteur photosensible et génération dudit signal vidéo comprenant toutes les données relatives à ladite image optique sécurisée, une étape de transmission dudit signal vidéo électrique de l'image optique sécurisée et une étape de réception, à distance dudit récepteur photosensible, dudit signal vidéo permettent en particulier d'acheminer le signal vidéo du récepteur photosensible à un dispositif de visualisation de l'image optique sécurisée éloigné dudit récepteur photosensible. Ces étapes de transmission et de réception, ainsi que l'étape de capture de l'image optique sécurisée et de visualisation au moyen du dispositif de visualisation peuvent être mises en oeuvre par un système vidéo préexistant et destiné au contrôle à distance dudit véhicule. La présente invention propose en particulier de sécuriser la transmission de l'image dudit objet par ledit système vidéo.

La présente invention propose également un dispositif de sécurisation, en particulier en temps réel, d'une transmission à distance d'une image d'un objet destinée à être prise par un récepteur photosensible d'une caméra d'un système vidéo apte à permettre une transmission et une visualisation à distance de ladite image dudit objet, ledit dispositif de sécurisation étant en particulier adapté audit système vidéo, et caractérisé en ce qu'il comprend:
- un générateur d'information optique de sécurisation apte à générer, en particulier par rayonnement, par exemple par rayonnement cohérent ou incohérent, par diffusion ou émission optique, une information optique de sécurisation destinée à former une image de sécurisation, ledit générateur étant de plus apte à être couplé à un module optique. En particulier, le générateur est une source de rayonnement apte à émettre ou diffuser un rayonnement comprenant ladite information optique de sécurisation destinée à la sécurisation de la transmission de l'image dudit objet;
- ledit module optique apte à superposer optiquement ladite image de sécurisation comprenant ladite information optique de sécurisation, et ladite image dudit objet, afin de former, à partir de la superposition de ladite image dudit objet et de ladite image de sécurisation, une image optique sécurisée dudit objet destinée à agir sur le récepteur photosensible.

La présente invention propose également un dispositif de détection, en particulier en temps réel, d'une information optique de sécurisation d'une image optique sécurisée d'un objet susceptible d'être prise par un récepteur photosensible d'une caméra d'un système vidéo et destinée à être transmise et visualisée à distance au moyen dudit système vidéo, ladite image optique sécurisée étant une superposition d'une image de sécurisation et d'une image dudit objet destinée à agir sur le récepteur photosensible, ledit dispositif de détection étant en particulier adapté audit système vidéo, et caractérisé en ce qu'il comprend:
- un moyen de couplage apte à coupler des moyens de traitement d'un signal vidéo à un dispositif de réception à distance dudit signal vidéo afin de transmettre ledit signal vidéo dudit dispositif de réception dudit système vidéo auxdits moyens de traitement dudit dispositif de détection, ledit dispositif de réception étant en particulier destiné à réceptionné à distance dudit objet ledit signal vidéo de ladite image optique sécurisée;
- lesdits moyens de traitement du signal vidéo aptes à détecter, lire et extraire ladite information optique de sécurisation comprise dans le signal vidéo de ladite image optique sécurisée, résultant d'une superposition d'une image de sécurisation comportant ladite information optique de sécurisation et d'une image optique dudit objet;
- des moyens d'affichage de ladite information optique de sécurisation, en particulier aptes à coopérer avec un dispositif de visualisation du système vidéo.

La présente invention propose également un système de sécurisation, en particulier en temps réel, d'une transmission à distance d'une image d'un objet destinée à être capturée par un récepteur photosensible d'une caméra d'un système vidéo, ledit système de sécurisation comprenant ledit dispositif de sécurisation et ledit dispositif de détection, lesdits dispositifs de sécurisation et de détection étant destinés à coopérer l'un avec l'autre afin de permettre la sécurisation de la transmission de l'image dudit objet au moyen dudit système vidéo. Le dispositif de sécurisation et le dispositif de détection sont ainsi aptes à coopérer avec le système vidéo, comprenant par exemple une caméra apte à être embarquée, un dispositif de transmission, un dispositif de réception et un dispositif de visualisation, afin de sécuriser la transmission de l'image dudit objet prise par ladite caméra et de garantir la conformité de l'image dudit objet prise par le récepteur photosensible de la caméra avec l'image dudit objet visualisée à distance et en temps réel au moyen du dispositif de visualisation.

La méthode selon l'invention permet ainsi d'ajouter une information optique de sécurisation entre un objet filmé par la caméra et le capteur ou récepteur photosensible de ladite caméra, en superposant ladite image de sécurisation à ladite image (optique) dudit objet apte à être prise par le récepteur photosensible de la caméra, afin de former ladite image optique sécurisée dudit objet. L'image de sécurisation peut être générée par rayonnement, par exemple par émission de lumière ou diffusion de lumière. Le générateur d'information optique peut par exemple comprendre un modulateur spatial de lumière (MSL) apte à rayonner ladite information optique de sécurisation destinée à la sécurisation de la transmission de l'image dudit objet.

En particulier, l'information optique de sécurisation peut comprendre une information d'identification de la caméra, ou plus précisément une information d'identification du récepteur photosensible de la caméra, et/ou un datage permettant de dater optiquement la capture d'une image dudit objet par le récepteur photosensible. Notamment, le générateur d'information optique de sécurisation comprend un dispositif d'identification du récepteur photosensible de la caméra apte à fournir ladite information d'identification de la caméra. Par exemple, ledit dispositif d'identification permet un marquage optique de ladite information d'identification de la caméra dans l'image de sécurisation, ledit marquage optique permettant de différentier une image prise par une caméra d'une autre image prise par une autre caméra. Ledit dispositif d'identification est par exemple un masque optique dont une caractéristique géométrique est apte à permettre l'identification du récepteur photosensible de la caméra. En particulier, ledit masque optique est apte à coopérer avec ledit MSL du générateur d'information optique sécurisée afin de former une image de sécurisation comprenant ladite information d'identification du récepteur photosensible. Autrement dit, ladite information d'identification permet de différentier une capture par un récepteur photosensible d'une image optique dudit objet superposée à une image de sécurisation, d'une autre capture par un autre récepteur photosensible d'une autre image optique d'un autre objet superposée à une autre image de sécurisation. En particulier, l'identification du récepteur photosensible de la caméra utilise des propriétés physiques connues du système vidéo quant à son comportement en cas de défaillance afin de pouvoir garantir une sécurité intrinsèque dudit système vidéo. Par exemple, le marquage de ladite information d'identification selon la présente invention est basé sur le principe de ladite sécurité intrinsèque d'un véhicule guidé en ce que des conséquences d'une défaillance ou d'une dérive de caractéristiques dudit marquage, comme par exemple une obstruction totale ou partielle du récepteur photosensible de ladite caméra, une panne électrique ou un endommagement mécanique ne peut avoir comme conséquence qu'un arrêt intempestif dudit véhicule guidé et non l'inverse.

En particulier, au moins une partie de l'image optique sécurisée peut avantageusement comprendre une incrustation de l'information optique de sécurisation. En effet, au moins une partie de l'image de sécurisation est destinée à permettre ladite incrustation de données relatives à l'information optique de sécurisation. En particulier, l'identification de la caméra au moyen de ladite information d'identification, et/ou le datage peuvent être incrustés dans une partie ou dans tout le plan de l'image optique sécurisée. Ladite incrustation peut ainsi être captée par au moins une partie du récepteur photosensible de la caméra. En particulier, l'image de sécurisation et l'image dudit objet ont une même taille sur le récepteur photosensible, de sorte que ladite incrustation est susceptible d'être répartie sur la totalité de la surface du récepteur photosensible de la caméra, et donc sur toute l'image optique sécurisée. La répartition du marquage spatial dans toute l'image de sécurisation permet avantageusement de détecter une perte de l'intégrité de l'image dudit objet captée par le récepteur photosensible lorsque ladite image de sécurisation a la même taille que l'image dudit objet lors de leur superposition.

Ladite méthode selon l'invention est en particulier capable de garantir la conformité d'une image d'un objet prise par le récepteur photosensible de la caméra d'un système vidéo avec son affichage servant à la visualisation à distance dudit objet. Le générateur d'information optique de sécurisation est en effet apte à générer une information optique de sécurisation par rayonnement, destinée à permettre une détermination de ladite conformité lors d'une lecture dudit signal vidéo de l'image optique sécurisée. En particulier, ledit générateur d'information est apte à être couplé au module optique afin de superposer ladite image de sécurisation produite par une interaction dudit rayonnement avec des éléments optiques dudit module optique ou dudit générateur, à une image dudit objet capturable par le récepteur photosensible. Le module optique permet la superposition de l'image de sécurisation et de l'image dudit objet avant le récepteur photosensible, ou sur le récepteur photosensible de la caméra.

Ledit module optique est en particulier apte à former sur le récepteur photosensible ladite image optique sécurisée correspondant à la superposition optique de l'image de sécurisation et de l'image dudit objet. Le récepteur photosensible de la caméra est ensuite apte à transformer l'image optique sécurisée en un signal vidéo apte à restituer une image vidéo sécurisée représentant ladite image optique sécurisée.

Un système vidéo, en particulier un système vidéo conventionnel comprenant ladite caméra, un dispositif de transmission permettant une transmission dudit signal vidéo, un dispositif de réception permettant une réception à distance dudit signal vidéo et son traitement, un dispositif de visualisation permettant une visualisation de l'image vidéo supportée par ledit signal vidéo permet un acheminement du signal vidéo de l'image optique sécurisée de la caméra audit dispositif de visualisation éloigné dudit objet ou dudit récepteur photosensible.

Le dispositif de détection de l'information optique de sécurisation destinée à la sécurisation de la transmission à distance par le système vidéo de l'image dudit objet est en particulier destiné à coopérer avec ledit système vidéo afin de détecter et de lire l'information de sécurisation optique transportée par le signal vidéo de l'image optique sécurisée. Ledit dispositif de détection est en particulier apte à être couplé, au moyen d'au moins un moyen de couplage, audit dispositif de réception à distance dudit système vidéo afin de recevoir ledit signal vidéo de l'image optique sécurisée. Il est apte à comprendre de plus lesdits moyens de traitement de l'information optique de sécurisation qui sont aptes à détecter une information optique de sécurisation transportée par le signal vidéo de l'image optique sécurisée, et à lire et extraire ladite information optique de sécurisation. De plus, lesdits moyens de traitements sont en particulier aptes à séparer une partie du signal vidéo comprenant des données relatives à ladite image de sécurisation, et donc ladite information optique de sécurisation, d'une autre partie du signal vidéo comprenant d'autres données relatives à l'image (optique) dudit objet. Avantageusement, cette séparation permet d'afficher séparément lesdites données relatives à l'image de sécurisation et lesdites autres données relatives à l'image (optique) dudit objet afin de permettre un affichage séparé de ladite image dudit objet et de ladite information optique de sécurisation.

De plus, les moyens de traitement de l'information optique de sécurisation sont en particulier aptes à analyser l'information optique de sécurisation afin de déterminer si l'image dudit objet affichable à distance par le dispositif de visualisation du système vidéo à partir du signal vidéo de ladite image optique sécurisée est conforme à l'image dudit objet capturée par le récepteur photosensible. De plus, lesdits moyens de traitement sont notamment aptes à signaler, en particulier visuellement et/ou auditivement, une défaillance de la transmission à distance de données relatives à l'image dudit objet, par exemple une divergence de la conformité de l'image dudit objet restituable à distance à partir dudit signal vidéo de l'image optique sécurisée après séparation desdites données relatives et desdites autres données relatives, avec l'image (optique) dudit objet destinée à être capturée par ledit récepteur photosensible.

Finalement, les moyens d'affichage de ladite information optique de sécurisation sont en particulier aptes à coopérer avec ledit dispositif de visualisation du système vidéo afin de permettre par exemple la visualisation de ladite image dudit objet et de ladite information optique de sécurisation sur un même écran. Ainsi, le dispositif de détection permet un affichage à distance de la caméra de l'information optique de sécurisation et de l'image dudit objet, avec en particulier un affichage d'une vérification de l'origine et de la fraicheur de l'information optique de sécurisation ainsi que de l'intégrité de l'image dudit objet. En particulier, lesdits moyens de traitement sont aptes à déterminer l'intervalle de temps Δt séparant le temps de la capture de l'image dudit objet du temps de l'affichage à distance de l'image dudit objet. Si cet intervalle de temps Δt dépasse une valeur limite préfixée, les moyens de traitements selon l'invention sont en particulier aptes à signaler le dépassement.

Avantageusement, le dispositif de sécurisation selon l'invention permet la superposition de deux images optiques à l'entrée de la caméra, i.e. l'image dudit objet tel que normalement filmé par la caméra et ladite image de sécurisation. L'image dudit objet est par exemple une image optique d'une scène apte à être filmée par la caméra et destinée à être visualisée à distance par un opérateur au moyen dudit dispositif de visualisation du système vidéo. L'image de sécurisation comprend ladite information optique de sécurisation destinée à permettre une détermination de la conformité de l'image dudit objet affichable à distance au moyen du dispositif de visualisation, avec l'image dudit objet capturable par le récepteur photosensible de la caméra.

Ainsi, le dispositif de sécurisation selon l'invention est apte à insérer ladite information optique de sécurisation dans des images vidéo pouvant être prises par une caméra avant que lesdites images vidéo ne soient modifiées ou manipulées électroniquement. En effet, l'information optique de sécurisation est insérée optiquement à l'image (optique) dudit objet avant capture par la caméra. Avantageusement, comme l'insertion de l'information optique de sécurisation est faite de manière optique avant toute transformation en signal vidéo de l'image captée par le récepteur photosensible, il s'ensuit que ladite insertion de l'information optique de sécurisation est indépendante du fonctionnement et du type de système vidéo. Le dispositif de sécurisation selon l'invention peut ainsi être avantageusement adaptable à tout type de système vidéo, quels que soient ses caractéristiques ou son fonctionnement. En particulier, ledit dispositif de sécurisation est apte à être fixé devant, ou directement à la caméra afin de former ladite image optique sécurisée sur le récepteur photosensible de la caméra.

De plus, le générateur d'information optique est apte à générer une information optique de sécurisation variant temporellement et/ou spatialement. La variation temporelle de l'information optique de sécurisation est par exemple destinée à marquer temporellement l'image de sécurisation, par exemple au moyen dudit datage, de sorte que chaque image de sécurisation superposable à ladite image dudit objet comprenne un marquage temporel différent (par exemple une date différente), tandis que la variation spatiale de l'information optique de sécurisation est par exemple destinée à marquer spatialement l'image de sécurisation, notamment en incrustant une information d'identification de la caméra, ou un identifiant spatial de la caméra, en particulier dans toute l'image de sécurisation.

Ainsi, chaque image optique sécurisée sera apte à résulter de la superposition optique de ladite image dudit objet et de ladite image de sécurisation, et donc à comprendre en particulier une information de sécurisation relative au marquage temporel et/ou spatial susmentionnée, afin que, par exemple, chaque image optique sécurisée comprenne une date et une identification, au moyen dudit identifiant spatial, de la caméra comprenant ledit récepteur photosensible.

A cette fin, le dispositif de sécurisation et le dispositif de détection selon l'invention peuvent en particulier chacun comprendre une horloge. L'horloge du dispositif de détection et l'horloge du dispositif de sécurisation sont en particulier aptes à être synchronisées l'une avec l'autre afin de permettre un contrôle temporel précis du système vidéo par comparaison de la date indiquée par l'horloge du dispositif de détection avec la date extraite, au moyen desdits moyens de traitement, de l'information optique de sécurisation du signal vidéo de l'image optique sécurisée. La comparaison desdites dates permet notamment de déterminer si l'intervalle de temps Δt dépasse ladite valeur limite préfixée.

Avantageusement, l'identifiant spatial de la caméra est en particulier une information optique de sécurisation inaltérable en ce qu'elle est apte à définir un niveau d'intégrité de sécurité SIL 4 (Safety Integrity Level) concernant la probabilité de confondre deux caméras. Le niveau d'intégrité de sécurité SIL 4 est défini par la norme IEC 61508 sur la sécurité des systèmes critiques et requiert une probabilité d'une défaillance dangereuse par heure comprise entre 10⁻⁸ et 10⁻⁹. Le marquage spatial au moyen dudit identifiant spatial permet de marquer l'image dudit objet capturable par chaque récepteur photosensible de chaque caméra avec une information d'identification propre à chaque récepteur photosensible, ou autrement dit, avec un identifiant spatial spécifique à chaque récepteur photosensible, de sorte que chaque image dudit objet visualisable à distance au moyen dudit dispositif de visualisation soit associable à un et un seul récepteur photosensible avec le niveau d'intégrité de sécurité SIL 4. A cette fin, les moyens de traitement de l'information optique de sécurisation sont aptes à classifier plusieurs signaux vidéo de différentes images optiques sécurisées en fonction dudit identifiant spatial de la caméra.

Des exemples de réalisations et d'applications fournis à l'aide des figures suivantes aideront à mieux comprendre la présente invention.
- Figure 1: exemple de réalisation selon l'invention d'un système de sécurisation d'une transmission d'une image vidéo.
- Figure 2: exemple de réalisation selon l'invention d'un dispositif de sécurisation d'une transmission d'une image vidéo comprenant un montage 4F.
- Figure 3: exemple de réalisation selon l'invention d'un dispositif de sécurisation d'une transmission d'une image vidéo comprenant une lame semiréfléchissante.
- Figure 4: exemple de réalisation selon l'invention d'un dispositif de sécurisation d'une transmission d'une image vidéo comprenant une projection de l'information optique de sécurisation.

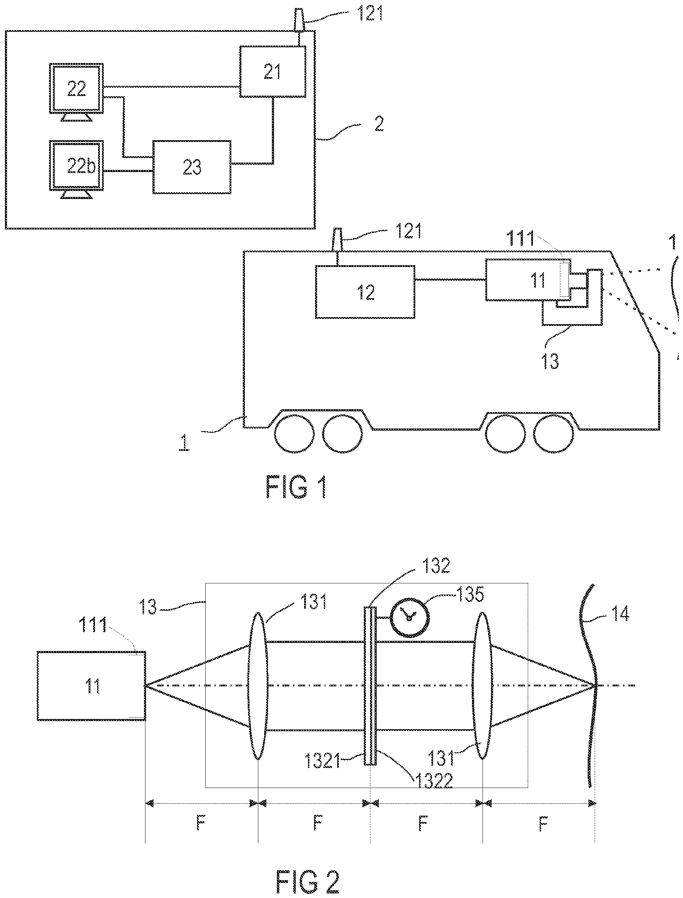

A titre d'exemple, la figure 1 montre un système de sécurisation adapté à la sécurisation d'une transmission, à distance, par un système vidéo d'une image (optique) d'un objet 14, ladite image dudit objet 14 étant en particulier destinée à agir sur un récepteur photosensible 111 dudit système vidéo, et à servir par exemple au contrôle à distance d'un véhicule 1. Ledit système vidéo comprend notamment:
- une caméra 11, comprenant ledit récepteur photosensible 111, apte à être embarquée dans ledit véhicule 1 ou délocalisée par rapport à un poste de contrôle 2, ledit récepteur photosensible 111 étant apte à transformer un rayonnement lumineux en un signal vidéo;
- un dispositif de transmission 12 apte à transmettre ledit signal vidéo dudit photorécepteur à un dispositif de réception 21. Ledit dispositif de transmission 12 est de plus apte à être embarqué dans ledit véhicule 1 ou délocalisé dudit poste de contrôle 2, ainsi qu'apte à être couplé à ladite caméra 11 afin de transmettre ledit signal vidéo, par exemple au moyen d'une antenne 121 susceptible d'équiper ledit dispositif de transmission et destinée à la transmission à distance dudit signal vidéo;
- ledit dispositif de réception 21 est apte à réceptionner et traiter ledit signal vidéo. Ledit dispositif de réception 21 est en particulier destiné à équiper ledit poste de contrôle 2 à distance et à coopérer avec un dispositif de visualisation 22 afin de permettre un affichage de ladite image dudit objet prise par ladite caméra et restituable à partir dudit signal vidéo. Ledit dispositif de réception 21 peut en particulier comprendre une antenne 121 afin de réceptionner la transmission dudit signal vidéo par ledit dispositif de transmission 12;
- ledit dispositif de visualisation 22 apte à être couplé audit dispositif de réception 21 et destiné à l'affichage, par exemple sur un écran, de l'image dudit objet portée par ledit signal vidéo.

En d'autres termes, ledit système vidéo est un système de vision à distance d'au moins une image prise par ledit récepteur photosensible 111, ladite image étant destinée par exemple à permettre à un opérateur, situé dans le poste de contrôle 2, de piloter à distance ledit véhicule 1 à partir d'une visualisation de l'affichage en temps réel de ladite image dudit objet. Ledit système de sécurisation selon l'invention est en particulier destiné à être couplé et à coopérer avec un tel système vidéo afin de garantir une correspondance entre une image dudit objet prise par le récepteur photosensible 111, et ladite image dudit objet affichable en temps réel à distance au moyen dudit dispositif de visualisation 22.

Ledit système de sécurisation selon l'invention comprend notamment un dispositif de sécurisation 13 de la transmission à distance de l'image dudit objet 14 et un dispositif de détection 23 d'une information optique de sécurisation d'une image optique sécurisée dudit objet 14. Le dispositif de sécurisation 13 et le dispositif de détection 23 coopèrent d'une part l'un avec l'autre, et d'autre part avec ledit système vidéo auquel ils peuvent chacun être couplé par des moyens de couplage, afin de garantir ladite correspondance entre l'image dudit objet capturable par le récepteur photosensible 111 de la caméra 11, et l'image dudit objet affichable et visualisable à distance en temps réel au moyen dudit dispositif de visualisation 22 dudit système vidéo. D'une part, le dispositif de sécurisation est apte à sécuriser ladite image dudit objet en créant ladite image optique sécurisée dudit objet par incorporation optique dans l'image dudit objet d'une information optique de sécurisation, ladite image optique sécurisée étant une image sécurisée dudit objet, et d'autre part, le dispositif de détection est apte à détecter la sécurisation de ladite image optique sécurisée afin de déterminer si l'image dudit objet capturable par le récepteur photosensible correspond à l'image dudit objet affichable à distance. En particulier, la méthode, le système de sécurisation, le dispositif de sécurisation et de détection selon l'invention sont particulièrement adapté à la sécurisation d'une transmission d'une image dudit objet par un système vidéo destiné au contrôle à distance d'un véhicule, en particulier d'un véhicule guidé.

Les figures 2 à 4 présentent chacune un exemple différent de réalisation dudit dispositif de sécurisation 13. En particulier, le dispositif de sécurisation 13 est apte à générer, par exemple par rayonnement, une information optique de sécurisation de la transmission à distance de l'image dudit objet 14. A cette fin, il comprend notamment un générateur 132 d'information optique de sécurisation apte à générer, en particulier par modification spatiale d'un rayonnement lumineux, ladite information optique de sécurisation. Le dispositif de sécurisation peut comprendre en outre un module optique, comprenant des éléments optiques comme par exemple au moins une lentille optique 131 ou une lame semi-réfléchissante 134, ledit module optique étant apte à superposer optiquement une image de sécurisation comprenant ladite information optique de sécurisation, à une image dudit objet 14 afin de former une image optique sécurisée destinée à agir sur le récepteur photosensible 111 de la caméra 11. Ainsi, le générateur 132 est apte à coopérer avec le module optique afin de créer ladite image de sécurisation superposable à l'image dudit objet. Le module optique est en particulier capable de former ladite image optique sécurisée sur le récepteur photosensible 111 afin de transformer ladite image sécurisée en un signal vidéo apte à être généré par ledit récepteur photosensible 111. Le signal vidéo est ensuite destiné à être transmis au moyen du système vidéo, à un poste de contrôle à distance 2 où des moyens de traitement du dispositif de détection 23 seront aptes à restituer l'image dudit objet et l'information optique de sécurisation à partir dudit signal vidéo de l'image optique sécurisée.

En particulier, le dispositif de détection 23 peut être couplé à un dispositif de visualisation 22 du système vidéo, et/ou couplé à un autre dispositif de visualisation 22b destiné à afficher l'information optique de sécurisation portée par ledit signal vidéo.

La figure 2 présente en particulier un exemple de réalisation dudit dispositif de sécurisation 13 selon l'invention, basé sur un montage 4F. Cet exemple de réalisation propose de moduler en intensité l'image dudit objet par une transformée de Fourier optique à deux dimensions de l'image de sécurisation produite par un MSL (Modulateur Spatial de Lumière)1321 couplable à un masque d'identification 1322 (masque d'intensité) dudit générateur 132. Dans ce cas particulier, ledit générateur 132 comprend ainsi ledit MSL 1321 destiné à générer ladite information optique de sécurisation, par exemple un datage de l'image dudit objet, et ledit masque 1322 apte à contenir une information d'identification du récepteur photosensible 111. En particulier, le MSL est un dispositif capable de modifier des composantes spatiales d'un faisceau lumineux, par exemple par variation d'intensité desdites composantés. Il s'agit par exemple d'un dispositif sous forme matricielle, par exemple une matrice active utilisant une technologie de cristaux liquides, de micros miroirs, ou de diode électroluminescente organique (OLED), apte à être commandé électriquement. Il permet en particulier de coder ladite information optique de sécurisation par modulation lumineuse de pixels de la matrice dudit MSL. Ainsi, l'information d'identification du récepteur photosensible et le datage de la capture de l'image dudit objet peuvent être codés par le MSL sous la forme d'au moins une variation d'intensité lumineuse superposable à ladite image dudit objet. La transformée de Fourier est obtenue en réalisant un montage 4F à l'aide de deux lentilles de Fourier 131 de focales F disposées de part et d'autre dudit générateur 132, à une distance égale à la distance focale desdites lentilles de Fourier 131. En particulier, le MSL est connectable à une horloge 135 afin de générer ledit datage. Avantageusement, ladite information optique de sécurisation peut être répartie dans toute l'image dudit objet étant donné que le générateur 132 est situé à l'emplacement d'un plan de Fourier correspondant au domaine fréquentiel de l'image dudit objet. L'image optique sécurisée destinée à agir sur le récepteur photosensible 111 est la superposition de l'image dudit objet et de l'image de sécurisation, i.e. la combinaison du masque et de la matrice du MSL. L'image optique sécurisée est apte à générer ledit signal vidéo en interagissant avec le récepteur photosensible. Ce signal vidéo de l'image optique sécurisée est destiné à être traité par ledit dispositif de détection 23. Dans ce cas particulier, ledit dispositif de détection 23 peut comprendre un module optique capable de séparer l'image de sécurisation de ladite image dudit objet, en permettant ainsi une restitution de ladite information optique de sécurisation à partir dudit signal vidéo.

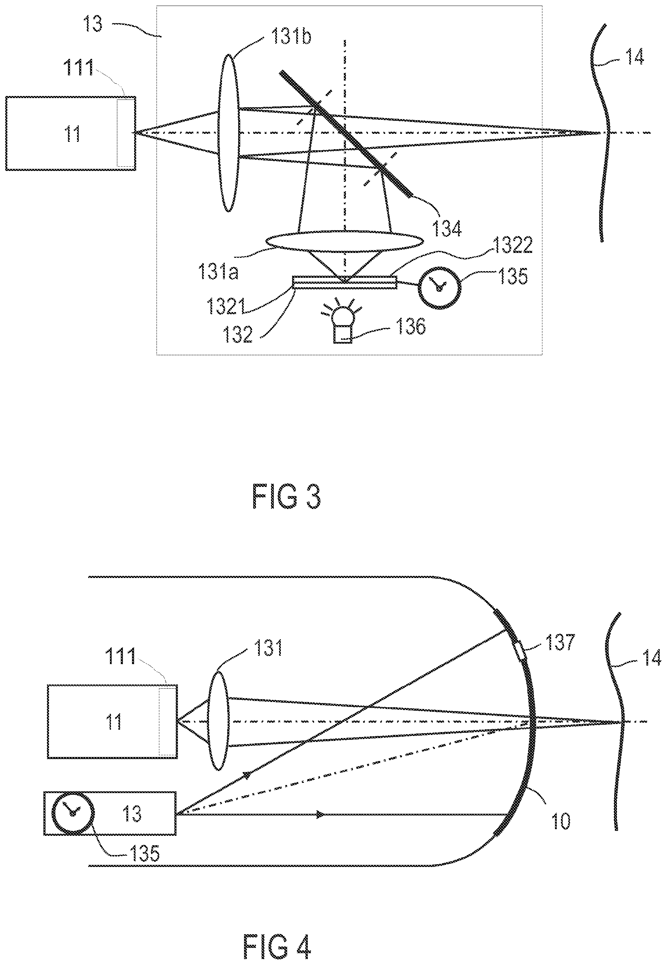

La figure 3 présente un autre exemple de réalisation du dispositif de sécurisation 13 selon l'invention, basé notamment sur l'utilisation d'une lame semi-réfléchissante 134. Ledit dispositif de sécurisation 13 est en particulier adaptable à la caméra 11 du système vidéo, et est caractérisé en ce qu'il comprend un générateur 132 d'information optique de sécurisation apte à générer une information optique de sécurisation, en particulier par rayonnement et un module optique comprenant la lame semi-réfléchissante 134 et au moins un système optique 131a, 131b. En outre, ledit générateur 132 peut comprendre une source lumineuse 136, un MSL 1321 et une horloge 135.

Ledit module optique est en particulier apte à être couplé audit générateur 132 afin de superposer optiquement une image de ladite information optique de sécurisation, i.e. ladite image de sécurisation, à une image optique dudit objet afin de former, par superposition, une image optique sécurisée destinée à agir sur le récepteur photosensible 111 de ladite caméra 11. Le récepteur photosensible 111 peut ainsi recevoir d'une part l'image dudit objet 14, et d'autre part l'image de sécurisation formée par des rayons lumineux provenant de ladite source lumineuse 136 et pouvant traversant par exemple le MSL 1321, ce dernier étant capable d'afficher sur sa matrice une information de sécurisation destinée à générer ladite information optique de sécurisation par interaction avec lesdits rayons lumineux, à l'instar d'un projecteur de diapositive. Ainsi, au moins une partie des rayons lumineux de la source lumineuse 136 traversent le générateur 132, puis traversent un premier système optique 131a, sont réfléchis par la lame semi-réfléchissante 134, traversent un second système optique 131b et agissent finalement sur le récepteur photosensible 111. Des rayons lumineux provenant dudit objet 14 traversent la lame semi-réfléchissante 134, puis le second système optique 131b afin d'agir sur le récepteur photosensible 111. Le premier système optique 131a, le second système optique 131b et la lame semi-réfléchissante sont disposés de façon à superposer, sur le récepteur photosensible 111, ladite image de sécurisation et ladite image dudit objet. Ces deux images sont superposables optiquement au niveau du récepteur photosensible. Le MSL est en particulier capable d'interagir avec les rayons lumineux de la source lumineuse 136 afin de générer ladite information optique de sécurisation, comprenant par exemple un identifiant du récepteur photosensible 111 et une date de la capture de l'image dudit objet. Avantageusement, la lame semi-réfléchissante 134 permet la superposition de l'image de sécurisation et de l'image dudit objet 12.

Le second système optique 131b est capable de conjuguer l'image dudit objet avec un plan photosensible du récepteur photosensible 111, i.e. le plan capable d'interagir avec des rayons lumineux afin de générer ledit signal vidéo. Un couplage du premier et du second système optique 131a, 131b permet de conjuguer la matrice du MSL (i.e. le plan du MSL sur lequel est affichable ladite information optique de sécurisation) avec ledit plan photosensible du récepteur photosensible. En particulier, le MSL est adressable électriquement afin de modifier des composantes spatiales des rayons lumineux provenant de ladite source lumineuse 136 et ainsi, de générer ladite image de sécurisation. Le MSL peut ainsi générer une information d'identification de la caméra et de datation pouvant être codée par une modulation lumineuse de pixels de la matrice du MSL.

Le générateur 132 peut en particulier comprendre un masque physique 1322 spécifique à chaque caméra, destiné à filtrer les rayons lumineux de ladite source lumineuse 136 susceptibles de traverser la matrice du MSL. En d'autres termes, le masque physique 1322 agit comme un filtre en permettant uniquement à une partie desdits rayons lumineux de former ladite image de sécurisation. En particulier, en associant à chaque récepteur photosensible un masque physique qui lui est propre, il résultera que chaque caméra possèdera un code unique d'identification. Ainsi, la sélection de ladite partie des rayons lumineux dépendra de manière unique dudit récepteur photosensible 111 et permettra dès lors la détermination du récepteur photosensible ayant capturé ladite image optique sécurisée à partir du signal vidéo de ladite image optique sécurisée. Avantageusement, une filtration desdits rayons par un masque physique au niveau du MSL est de plus invariante en fonction du temps, et donc garante de sécurité. En effet, le masque physique 1322 est d'une part résistant à une altération volontaire ou involontaire, et d'autre part, en cas de modification, il ne peut être confondu avec le masque physique d'une autre caméra. Ainsi, en cas de défaillance du système vidéo observée lors du traitement de l'information optique de sécurisation portée par ledit signal vidéo, ledit masque physique permet de repérer rapidement quel système vidéo est défaillant et de le mettre dans un état de sécurité.

La figure 4 présente un exemple de réalisation du dispositif de sécurisation 13 selon l'invention comprenant une projection de l'information optique de sécurisation sur un pare-brise 10 d'un véhicule. En particulier, le générateur d'information optique de sécurisation comprend un projecteur vidéo apte à être couplé à une horloge 135 destinée au datage des images capturées par le récepteur photosensible 111 de la caméra 11. Une identification du récepteur photosensible 111 est en particulier projetable sur le pare-brise 10 afin d'être captée par le récepteur photosensible 111. Selon un autre mode de réalisation, ledit dispositif de sécurisation 13 comprend un code d'identification à deux dimensions 137 intégrable audit pare-brise 10 et permettant l'identification du récepteur photosensible 111. Le générateur d'information optique de sécurisation est en particulier capable de générer ladite information optique de sécurisation dans toute l'image dudit objet tout en garantissant une visualisation de l'image dudit objet. En d'autres termes, la superposition de ladite image de sécurisation à ladite image dudit objet est capable de permettre une visualisation correcte de l'image dudit objet par un opérateur à partir d'une visualisation de l'image optique sécurisée. Ledit dispositif de sécurisation 13 comprend en particulier un système optique 131 capable de conjuguer l'image dudit objet 14 avec le plan photosensible du récepteur photosensible 111.

Finalement, l'horloge 135 dudit dispositif de sécurisation 13 est d'une part synchronisable à une horloge de la caméra, ainsi qu'à une horloge dudit dispositif de détection 23 afin de déterminer l'intervalle de temps entre la capture d'une image dudit objet et son affichage à distance.

En résumé, la méthode et le système de sécurisation d'une transmission d'une image vidéo, ainsi que le dispositif de sécurisation et le dispositif de détection selon l'invention présentent plusieurs avantages par rapport aux méthodes et systèmes de sécurisation existant en ce que:
- ils évitent de concevoir un système de sécurisation dont chaque sous-système est sûr de fonctionnement. En effet, l'ensemble du système vidéo est validé en sécurité et non chacun des sous-éléments composant ledit système vidéo. Ce principe de restitution de l'image vidéo permet de s'affranchir des causes de défaillances du système vidéo. Il permet de donner à un opérateur visualisant à distance l'image vidéo d'un objet des informations optiques de sécurisation servant à la détection d'une dysfonction de ladite image vidéo (origine, fraîcheur ou intégrité de l'image);
- ils permettent de diagnostiquer automatiquement une défaillance de l'image vidéo dudit objet et de déclencher automatiquement une alarme (visuelle, auditive, vibrante, ...) associée par exemple à une mise en état de sûreté d'un système de contrôle à distance du véhicule. Par exemple, une commande de freinage d'urgence d'un véhicule guidé peut être envoyée automatiquement ou manuellement suite à la détection de ladite défaillance;
- ils permettent aussi un signalement d'erreur dans l'affichage de l'image dudit objet.

## Revendications

1. Méthode de sécurisation d'une transmission à distance d'une image d'un objet (14) destinée à être capturée par un récepteur photosensible (111) d'une caméra (11) d'un système vidéo et transmise à distance par ledit système vidéo, ladite méthode étant destinée à valider la sûreté de fonctionnement dudit système vidéo et étant **caractérisée par** les étapes suivantes:
- une génération d'une information optique de sécurisation de la transmission à distance de ladite image dudit objet (14),
- une formation d'une image optique sécurisée par superposition optique d'une image de sécurisation comprenant ladite information optique de sécurisation et de l'image dudit objet (14), ladite image optique sécurisée étant destinée à agir sur le récepteur photosensible (111) de la caméra (11) afin d'être transformée en un signal vidéo,
- une vérification de l'information optique de sécurisation portée par ledit signal vidéo et une détermination à partir d'une analyse l'information optique de sécurisation d'une conformité de l'image dudit objet affichable à distance à partir du signal vidéo de ladite image optique sécurisée avec l'image dudit objet capturée par le récepteur photosensible.

2. Méthode de sécurisation selon revendication 1 **caractérisée par** une variation temporelle de l'information optique de sécurisation.

3. Méthode de sécurisation selon une des revendications 1 ou 2 **caractérisée par** une variation spatiale de l'information optique de sécurisation.

4. Méthode de sécurisation selon une des revendications 1 à 3 **caractérisée en ce que** ladite information optique de sécurisation comprend une information d'identification de ladite caméra (11).

5. Méthode de sécurisation selon une des revendications 1 à 4 **caractérisée en ce qu'**au moins une partie de l'image optique sécurisée comprend une incrustation de l'information optique de sécurisation.

6. Méthode de sécurisation selon une des revendications 1 à 5 **caractérisée en ce qu'**elle comprend un signalement d'une divergence de ladite conformité.

7. Dispositif de détection (23) d'une information optique de sécurisation d'une image optique sécurisée d'un objet (14) susceptible d'être prise par un récepteur photosensible (111) d'une caméra (11) d'un système vidéo, **caractérisé en ce que** ledit dispositif de détection (23) est destiné à valider la sûreté de fonctionnement dudit système vidéo et comprend:
- un moyen de couplage apte à coupler des moyens de traitement d'un signal vidéo à un dispositif de réception (21) à distance dudit signal vidéo du système vidéo,
- lesdits moyens de traitement du signal vidéo aptes à détecter, lire et extraire ladite information optique de sécurisation comprise dans le signal vidéo de ladite image optique sécurisée, et à analyser l'information optique de sécurisation afin de déterminer si l'image dudit objet affichable à distance à partir du signal vidéo de ladite image optique sécurisée est conforme à l'image dudit objet capturée par le récepteur photosensible.
- des moyens d'affichage (22, 22b) de ladite information optique de sécurisation.

8. Dispositif de détection (23) selon revendication 7 **caractérisé en ce que** les moyens de traitement sont aptes à analyser ladite information optique de sécurisation et à signaler une défaillance de la transmission à distance de données relatives à une image dudit objet (14).

9. Système de sécurisation d'une transmission à distance d'une image vidéo comprenant:
- un dispositif de sécurisation (13) d'une transmission à distance d'une image d'un objet (14) destinée à être capturée par un récepteur photosensible (111) d'une caméra (11) d'un système vidéo, ledit dispositif de sécurisation (13) comprenant:
i. un générateur (132) d'information optique de sécurisation apte à générer une information optique de sécurisation destinée à former une image de sécurisation, et apte à être couplé à un module optique,
ii. ledit module optique apte à superposer optiquement ladite image de sécurisation et ladite image dudit objet (14) afin de former une image optique sécurisée destinée à agir sur le récepteur photosensible (111);
- ledit dispositif de détection (23) selon revendication 7,
lesdits dispositifs de sécurisation (13) et de détection (23) étant destinés à coopérer l'un avec l'autre afin de permettre la sécurisation de la transmission d'une image vidéo au moyen du système vidéo.

10. Système de sécurisation selon la revendication 9, **caractérisé en ce que** le générateur (132) d'information optique de sécurisation du dispositif de sécurisation (13) comprend un modulateur spatial de lumière (1321).

11. Système de sécurisation selon une des revendications 9 ou 10, **caractérisé en ce que** le dispositif de sécurisation (13) comprend une horloge (135) apte à être synchronisée avec une horloge du dispositif de détection (23) d'une information optique de sécurisation.

12. Système de sécurisation selon une des revendications 9 à 11, **caractérisé en ce que** le module optique du dispositif de sécurisation (13) comprend une lame semi-réfléchissante (134).

13. Système de sécurisation selon une des revendications 9 à 12, **caractérisé en ce que** le module optique du dispositif de sécurisation (13) comprend un montage 4F.

14. Système de sécurisation selon une des revendications 9 à 13, **caractérisé en ce que** ledit dispositif de sécurisation (13) comprend des moyens de couplage destiné à un couplage dudit dispositif de sécurisation (13) à la caméra (11) dudit système vidéo.

15. Système de sécurisation selon une des revendications 9 à 13, **caractérisé en ce que** ledit dispositif de détection (23) comprend des moyens de couplages destinés au couplage dudit dispositif de détection (23) à un dispositif de réception (21) dudit système vidéo.

## Patentansprüche

1. Verfahren zur Sicherung einer Fernübertragung eines Bildes eines Gegenstandes (14), das dazu vorgesehen ist, von einem lichtempfindlichen Empfänger (111) einer Kamera (11) eines Videosystems erfasst und vom Videosystem fernübertragen zu werden, wobei das Verfahren dazu vorgesehen ist, die Betriebssicherheit des Videosystems zu validieren, und durch die folgenden Schritte gekennzeichnet ist:
- die Erzeugung einer optischen Sicherungsinformation der Fernübertragung des Bildes des Gegenstandes (14),
- die Bildung eines optischen Bildes, das durch eine optische Überlagerung eines die optische Sicherungsinformation und das Bild des Gegenstandes (14) umfassenden Sicherungsbildes gesichert ist, wobei das gesicherte optische Bild dazu vorgesehen ist, auf den lichtempfindlichen Empfänger (111) der Kamera (11) einzuwirken, um in ein Videosignal umgewandelt zu werden,
- die Verifizierung der im Videosignal enthaltenen optischen Sicherungsinformation und mittels einer Analyse der optischen Sicherungsinformation die Bestimmung der Konformität des Bildes des Gegenstandes, das mittels des Videosignals des gesicherten optischen Bildes aus der Ferne anzeigbar ist, mit dem vom lichtempfindlichen Empfänger erfassten Bild des Gegenstandes.

2. Sicherungsverfahren nach Anspruch 1, **gekennzeichnet durch** eine zeitliche Variation der optischen Sicherungsinformation.

3. Sicherungsverfahren nach einem der Ansprüche 1 oder 2, **gekennzeichnet durch** eine räumliche Variation der optischen Sicherungsinformation.

4. Sicherungsverfahren nach einem der Ansprüche 1 bis 3, **dadurch gekennzeichnet, dass** die optische
Sicherungsinformation eine Information zur Identifizierung der Kamera (11) umfasst.

5. Sicherungsverfahren nach einem der Ansprüche 1 bis 4, **dadurch gekennzeichnet, dass** mindestens ein Teil des gesicherten optischen Bildes eine Einbettung der optischen Sicherungsinformation umfasst.

6. Sicherungsverfahren nach einem der Ansprüche 1 bis 5, **dadurch gekennzeichnet, dass** es eine Meldung einer Abweichung von der Konformität umfasst.

7. Vorrichtung (23) zur Erfassung einer optischen Sicherungsinformation eines gesicherten optischen Bildes eines Gegenstandes (14), das von einem lichtempfindlichen Empfänger (111) einer Kamera (11) eines Videosystems erfasst werden kann, **dadurch gekennzeichnet, dass** die Erfassungsvorrichtung (23) dazu vorgesehen ist, die Betriebssicherheit des Videosystems zu validieren, und Folgendes umfasst:
- ein Kopplungsmittel, das zum Koppeln von Mitteln zur Behandlung eines Videosignals mit einer Vorrichtung (21) zum Fernempfang des Videosignals des Videosystems geeignet ist,
- die Mittel zur Behandlung des Videosignals, die dazu geeignet sind, die im Videosignal des gesicherten optischen Bildes enthaltene optische Sicherungsinformation zu erfassen, zu lesen und zu extrahieren und die optische Sicherungsinformation zu analysieren, um zu bestimmen, ob das Bild des Gegenstandes, das mittels des Videosignals des gesicherten optischen Bildes aus der Ferne anzeigbar ist, mit dem vom lichtempfindlichen Empfänger erfassten Bild des Gegenstandes konform ist,
- Mittel (22, 22b) zum Anzeigen der optischen Sicherungs information.

8. Erfassungsvorrichtung (23) nach Anspruch 7, **dadurch gekennzeichnet, dass** die Behandlungsmittel dazu geeignet sind, die optische Sicherungsinformation zu analysieren und eine Störung der Fernübertragung von Daten zu einem Bild des Gegenstandes (14) zu signalisieren.

9. System zur Sicherung einer Fernübertragung eines Videobildes, umfassend:
- eine Vorrichtung (13) zur Sicherung einer Fernübertragung eines Bildes eines Gegenstandes (14), das zur Erfassung durch einen lichtempfindlichen Empfänger (111) einer Kamera (11) eines Videosystems vorgesehen ist, wobei die Sicherungsvorrichtung (13) Folgendes umfasst:
i. einen Generator (132) von optischen Sicherungsinformationen, der dazu geeignet ist, eine zur Erzeugung eines Sicherungsbildes vorgesehene optische Sicherungsinformation zu erzeugen, und dazu geeignet ist, mit einem optischen Modul gekoppelt zu werden,
ii. das optische Modul, das zur optischen Überlagerung des Sicherungsbildes und des Bildes des Gegenstandes (14) geeignet ist, um ein gesichertes optisches Bild zu bilden, das dazu vorgesehen ist, auf den lichtempfindlichen Empfänger (111) einzuwirken;
- die Erfassungsvorrichtung (23) nach Anspruch 7,
wobei die Sicherungs- (13) und die Erfassungsvorrichtung (23) dazu vorgesehen sind, miteinander zusammenzuwirken, um die Sicherung der Übertragung eines Videobildes mittels des Videosystems zu ermöglichen.

10. Sicherungssystem nach Anspruch 9, **dadurch gekennzeichnet, dass** der Generator (132) von optischen Sicherungsinformationen der Sicherungsvorrichtung (13) einen räumlichen Lichtmodulator (1321) umfasst.

11. Sicherungssystem nach einem der Ansprüche 9 oder 10, **dadurch gekennzeichnet, dass** die Sicherungsvorrichtung (13) eine Uhr (135) umfasst, die dazu geeignet ist, mit einer Uhr der Vorrichtung (23) zur Erfassung einer optischen Sicherungsinformation synchronisiert zu werden.

12. Sicherungssystem nach einem der Ansprüche 9 bis 11, **dadurch gekennzeichnet, dass** das optische Modul der Sicherungsvorrichtung (13) eine halbreflektierende Platte (134) umfasst.

13. Sicherungssystem nach einem der Ansprüche 9 bis 12, **dadurch gekennzeichnet, dass** das optische Modul der Sicherungsvorrichtung (13) eine 4f-Anordnung umfasst.

14. Sicherungssystem nach einem der Ansprüche 9 bis 13, **dadurch gekennzeichnet, dass** die Sicherungsvorrichtung (13) Kopplungsmittel umfasst, die zur Kopplung der Sicherungsvorrichtung (13) mit der Kamera (11) des Videosystems vorgesehen sind.

15. Sicherungssystem nach einem der Ansprüche 9 bis 13, **dadurch gekennzeichnet, dass** die Erfassungsvorrichtung (23) Kopplungsmittel umfasst, die zur Kopplung der Erfassungsvorrichtung (23) mit einer Empfangsvorrichtung (21) des Videosystems vorgesehen sind.

## Claims

1. Method for securing a remote transmission of an image of an object (14) intended to be captured by a photosensitive receiver (111) of a camera (11) of a video system and transmitted remotely by said video system, said method being intended to validate the safety of operation of said video system and being **characterised by** the following steps:
- Generation of an optical securing datum of the remote transmission of said image of said object (14),
- Formation of a secure optical image by optical superposition of a securing image comprising said optical securing datum and of the image of said object (14), said secure optical image being intended to act on the photosensitive receiver (111) of the camera (11) in order to be converted into a video signal,
- Verification of the optical securing datum carried by said video signal and determination from an analysis of the optical securing datum of conformity of the image of said remotely displayable object using the video signal of said secure optical image with the image of said object captured by the photosensitive receiver.

2. Securing method according to claim 1, **characterised by** a temporal variation of the optical securing datum.

3. Securing method according to one of claims 1 or 2, **characterised by** a spatial variation of the optical securing datum.

4. Securing method according to one of claims 1 to 3, **characterised in that** said optical securing datum includes an identification datum of said camera (11).

5. Securing method according to one of claims 1 to 4, **characterised in that** at least some of the secure optical image includes an overlay of the optical securing datum.

6. Securing method according to one of claims 1 to 5, **characterised in that** it comprises the flagging of a discrepancy in said conformity.

7. Device (23) for detecting an optical securing datum of a secure optical image of an object (14) that can be captured by a photosensitive receiver (111) of a camera (11) of a video system, **characterised in that** said detection device (23) is intended to validate the safety of operation of said video system and comprises:
- Coupling means able to couple the processing means of a video signal to a device (21) for remotely receiving said video signal of the video system,
- Said processing means of the video signal, which are able to detect, read and extract said optical securing datum included in the video signal of said secure optical image, and analyse the optical securing datum to determine whether the image of said remotely displayable object using the video signal of said secure optical image matches the image of said object captured by the photosensitive receiver.
- Means (22, 22b) for displaying said optical securing datum.

8. Detection device (23) according to claim 7, **characterised in that** the processing means are able to analyse said optical securing datum and to flag a failure of the remote transmission of the data relating to an image of said object (14) .

9. System for securing the remote transmission of a video image comprising:
- A device (13) for securing the remote transmission of an image of an object (14) to be captured by a photosensitive receiver (111) of a camera (11) of a video system, said securing device (13) comprising:
i. An optical securing data generator (132) that can generate an optical securing datum intended to form a securing image, and that is couplable to an optical module,
ii.Said optical module, which can optically superpose said securing image and said image of said object (14) in order to form a secure optical image intended to act on the photosensitive receiver (111);
- Said detection device (23) according to claim 7,
said securing device (13) and detection device (23) being intended to cooperate with each other to enable the securing of the transmission of a video image using a video system.

10. Securing system according to claim 9, **characterised in that** the optical securing data generator (132) of the securing device (13) includes a spatial light modulator (1321).

11. Securing system according to one of claims 9 or 10, **characterised in that** the securing device (13) includes a clock (135) that can be synchronised with a clock of the device (23) for detecting an optical securing datum.

12. Securing system according to one of claims 9 to 11, **characterised in that** the optical module of the securing device (13) includes a semi-reflective blade (134).

13. Securing system according to one of claims 9 to 12, **characterised in that** the optical module of the securing device (13) includes a 4F arrangement.

14. Securing system according to one of claims 9 to 13, **characterised in that** said securing device (13) includes coupling means intended to couple said securing device (13) to the camera (11) of said video system.

15. Securing system according to one of claims 9 to 13, **characterised in that** said detection device (23) includes coupling means intended to couple said detection device (23) to a receiver device (21) of said video system.
